# DEMANDE DE BREVET EUROPEEN

(11) **EP 0 845 402 A1**
(43) Date de publication de la demande: **03.06.1998**
(21) Numéro de dépôt: 97402867.2
(22) Date de dépôt: 27.11.1997
(51) Int. Cl.: B62D 1/19

(54) **Bride de fixation d'un corps de colonne de direction de véhicule automobile sur le reste de la structure de celui-ci**

(30) Priorité: 02.12.1996 FR 9614756
(71) Demandeur: ECIA - EQUIPEMENTS ET COMPOSANTS POUR L'INDUSTRIE AUTOMOBILE, F-25400 Audincourt (FR)
(72) Inventeur: Courvoisier, Patrick, 25600 Vieux-Charmont (FR); Bertrand, Jean-Marie, 25700 Mathay (FR)
(74) Mandataire: Habasque, Etienne Joel Jean-François

(57) **Abrégé**

Cette bride est caractérisée en ce qu'elle comporte une portion d'accrochage (3) présentant deux ailes (6,7) entre lesquelles s'étend une languette (8) formant entretoise venue de matière avec le reste de celle-ci et dans lesquelles sont ménagés des trous de passage (9,10) d'un organe de fixation de cette portion et autour desquels sont prévus des canons (11,12) de guidage de cet organe et de reprise des efforts de serrage de la bride, une portion (4) de réception du corps (1) dans laquelle sont prévus des moyens (15) de limitation des déplacements angulaires du corps dans celle-ci, et une portion (5) de liaison de la portion d'accrochage (3) et de la portion de réception (4) du corps, comportant au moins deux nervures opposées (13,14) de renfort de celle-ci.

## Description

La présente invention concerne une bride de fixation d'un corps de colonne de direction de véhicule automobile dans une chape correspondante du reste de la structure de celui-ci.

De manière générale, dans l'état de la technique, un corps de colonne de direction de véhicule automobile comporte à proximité de chacune de ses extrémités, des moyens de fixation de celui-ci sur le reste de la structure du véhicule.

Différents modes de réalisation de ces moyens de fixation ont déjà été envisagés.

C'est ainsi par exemple que ces moyens peuvent comporter des ferrures de fixation par exemple soudées ou serties sur le corps de colonne et associées à des moyens par exemple de vissage sur le reste de la structure du véhicule.

Différentes brides de fixation du corps ont également été décrites.

Une telle bride est par exemple utilisée dans un ensemble de colonne de direction à absorption d'énergie de choc, notamment pour véhicule automobile, tel que celui décrit dans la demande de brevet français n° 96 04 620 déposée le 12 avril 1996 au nom de la Demanderesse.

Dans cette demande de brevet, le corps est associé à proximité de chacune de ses extrémités à des moyens de fixation sur le reste de la structure du véhicule, autorisant un déplacement axial du corps par rapport à la structure consécutivement à un choc sur celui-ci.

Des moyens d'absorption d'énergie de choc par contrôle du déplacement du corps sont également prévus.

Dans cet ensemble, les moyens de fixation prévus à l'une des extrémités du corps comportent des moyens de fixation à décrochement contrôlé au choc et les moyens de fixation prévus à l'autre extrémité du corps, comportent une bride de réception à coulissement du corps, les moyens d'absorption d'énergie comprenant des moyens de freinage du déplacement du corps dans la bride, consécutivement à un choc, prévus entre celle-ci et le corps.

Le but de l'invention est de proposer différentes améliorations à une telle bride.

A cet effet, l'invention a pour objet une bride de fixation d'un corps de colonne de direction de véhicule automobile, dans une chape correspondante du reste de la structure de celui-ci, caractérisée en ce qu'elle comporte:
- une portion d'accrochage dans la chape, présentant deux ailes entre lesquelles s'étend une languette formant entretoise venue de matière avec le reste de celle-ci et dans lesquelles sont ménagés des trous de passage d'un organe de fixation de cette portion dans la chape et autour desquels sont prévus des canons de guidage de cet organe et de reprise des efforts de serrage de la chape autour de la bride,
- une portion de réception du corps dans laquelle sont prévus des moyens de limitation des déplacements angulaires du corps dans celle-ci, et
- une portion de liaison de la portion d'accrochage et de la portion de réception du corps comportant au moins deux nervures opposées de renfort de celle-ci.

L'invention sera mieux comprise à la lecture de la description qui va suivre, donnée uniquement à titre d'exemple et faite en se référant aux dessins annexés, sur lesquels :
- la Fig.1 représente une vue de côté d'une bride de fixation selon l'invention;
- la Fig.2 représente une vue de face d'une telle bride;
- la Fig.3 représente une vue en coupe d'une telle bride, prise selon la ligne III-III de la figure 1; et
- la Fig.4 représente une vue en coupe d'une partie d'une telle bride prise selon la ligne IV-IV de la figure 1.

On reconnaît en effet sur ces figures, une bride de fixation d'un corps de colonne de direction d'un véhicule automobile, désigné par la référence générale 1, sur le reste de la structure de celui-ci et plus particulièrement dans une chape correspondante de celui-ci, cette bride étant désignée par la référence générale 2.

Cette bride est avantageusement formée à partir d'un flan de tôle et comporte une portion d'accrochage désignée par la référence générale 3, adaptée pour permettre la fixation de cette bride dans la chape, une portion de réception du corps, désignée par la référence générale 4 et une portion de liaison désignée par la référence générale 5, de la portion d'accrochage 3 et de la portion de réception 4 du corps.

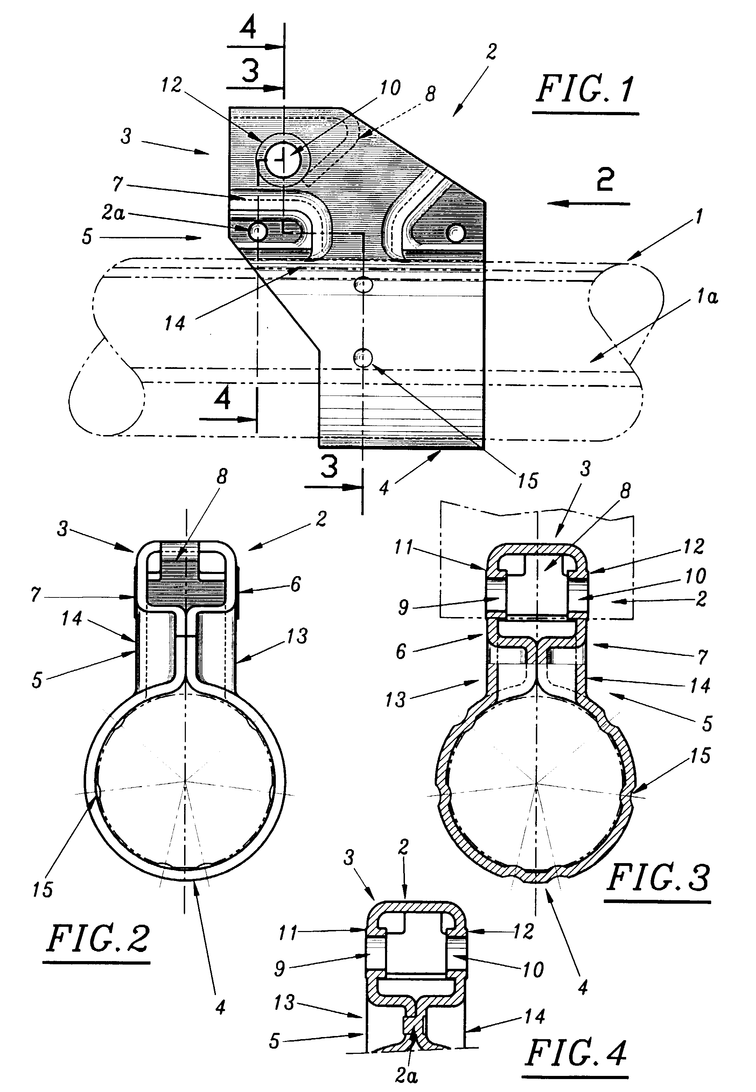

Comme cela est visible plus clairement sur les figures 2 et 3, la portion d'accrochage désignée par la référence générale 3 sur ces figures, présente deux ailes désignées par les références 6 et 7 sur ces figures, entre lesquelles s'étend une languette formant entretoise désignée par la référence générale 8, venue de matière avec le reste de celle-ci.

Lors de la formation de la bride à partir du flan de tôle, on peut en effet découper cette languette dans celui-ci. Cette languette est ensuite repliée pour s'étendre entre les ailes 6 et 7 de cette portion de la bride afin de former une entretoise s'étendant entre ces deux ailes.

De plus, des trous de passage d'un organe de fixation de cette portion d'accrochage de la bride dans la chape, sont également ménagés dans ces ailes. Ces trous de passage sont désignés par les références 9 et 10 sur ces figures.

Des canons de guidage de cet organe et de reprise des efforts de serrage de la chape autour de la bride peuvent étre prévus autour de ces trous de passage 9 et 10.

C'est ainsi par exemple que le canon ménagé autour du trou 9 est désigné par la référence générale 11 sur cette figure, tandis que celui ménagé autour du trou 10, est désigné par la référence générale 12.

On notera à cet égard que ces canons peuvent comporter chacun une partie en saillie sur la surface extérieure de l'aile correspondante de la bride et une partie en saillie sur la surface intérieure de cette aile.

Ces canons sont formés par tout procédé approprié connu dans l'état de la technique, et permettent d'optimiser le serrage de la chape autour de la bride et d'éviter toute déformation à ce niveau de la bride.

On conçoit que cette structure présente donc un certain nombre d'avantages au niveau de la qualité et de la fiabilité de la fixation de cette portion d'accrochage de la bride dans la chape, en raison de la présence de la languette formant entretoise entre les ailes de cette portion d'accrochage de la bride et de ces canons de guidage et de reprise d'effort.

La portion de liaison 5 de la portion d'accrochage 3 et de la portion 4 de réception du corps peut comporter comme cela est représenté sur ces figures, au moins deux nervures de renfort opposées de celle-ci. Ces nervures sont désignées par exemple par les références générales 13 et 14 sur ces figures.

Ces nervures de renfort sont également venues de matière avec le reste de la bride lors de la formation de celle-ci à partir du flan de tôle.

Ces nervures permettent de rigidifier la bride.

Enfin, la portion de réception 4 du corps de colonne 1 peut comporter comme cela est représenté sur ces figures, des moyens de limitation des déplacements angulaires du corps dans celle-ci.

Ces moyens comprennent par exemple des parties en saillie radiale vers l'intérieur de cette portion, dont l'une est désignée par exemple par la référence générale 15 sur ces figures, régulièrement réparties dans cette portion de réception du corps et étant adaptées pour coopérer avec des moyens complémentaires du corps de colonne pour assurer une immobilisation angulaire de celui-ci dans cette portion de réception de la bride.

On a décrit dans le document mentionné précédemment, la réalisation de parties en saillie 1a du corps 1 pour assurer une absorption d'énergie de choc lors du coulissement de celui-ci dans cette portion de la bride, par freinage de ce corps dans la bride.

Les moyens de limitation des déplacements angulaires du corps dans la portion de la bride, constitués par exemple par les parties en saillie de cette portion de bride, peuvent alors coopérer avec ces parties en saillie 1a du corps 1 pour assurer cette limitation des déplacements angulaires du corps.

Ceci est utile par exemple lors d'une tentative de vol du véhicule, pour empêcher la rotation du corps de colonne.

Il va de soi bien entendu que différents modes de réalisation de ces moyens de limitation des déplacements angulaires du corps dans la portion correspondante de la bride, peuvent être envisagés.

On conçoit alors que la structure de la bride qui vient d'être décrite, présente un certain nombre d'avantages par rapport aux brides connues dans l'état de la technique, dans la mesure où elle permet d'obtenir une fixation fiable et de qualité du corps de colonne sur le reste de la structure du véhicule.

Comme cela a été indiqué précédemment, cette bride peut étre formée par découpe et déformation d'un flan de tôle.

Celui-ci est alors travaillé de façon connue en soi pour obtenir les différentes portions décrites précédemment, ce flan de tôle pouvant être fermé par agrafage, sertissage, soudage ou autre.

De plus, des moyens de fixation tels que des sertissages comme celui illustré sur la figure 4 et désigné par la référence générale 2a, peuvent être prévus entre les parties en regard de la bride formées après déformation du flan de tôle, pour fixer celles-ci l'une sur l'autre, par exemple au niveau de la portion de liaison 5 de la bride.

Des pattes de fixation d'une partie de la bride rabattues sur l'autre partie de celle-ci, peuvent également être utilisées à la place de ces sertissages.

Bien entendu, la bride peut être déplaçable par pivotement dans la chape si l'ensemble de colonne est un ensemble de colonne de direction réglable en position angulaire.

Dans ce cas, ce réglage est facilité par la présence des canons de la bride et en particulier des parties en saillie externes de ceux-ci, qui permettent de définir de manière précise, des zones de contact pour le pivotement entre la bride et la chape.

On conçoit alors que cette structure permet de conférer à la bride une certaine élasticité permettant de contrôler les efforts de déplacement du corps de colonne dans celle-ci.

## Revendications

1. Bride de fixation d'un corps de colonne de direction de véhicule automobile, dans une chape correspondante du reste de la structure de celui-ci, caractérisée en ce qu'elle comporte :
- une portion d'accrochage (3) dans la chape, présentant deux ailes (6,7) entre lesquelles s'étend une languette (8) formant entretoise venue de matière avec le reste de celle-ci et dans lesquelles sont ménagés des trous de passage (9,10) d'un organe de fixation de cette portion dans la chape et autour desquels sont prévus des canons (11,12) de guidage de cet organe et de reprise des efforts de serrage de la chape autour de la bride,
- une portion (4) de réception du corps (1) dans laquelle sont prévus des moyens (15) de limitation des déplacements angulaires du corps dans celle-ci, et
- une portion (5) de liaison de la portion d'accrochage (3) et de la portion de réception (4) du corps comportant au moins deux nervures opposées (13,14) de renfort de celle-ci.

2. Bride selon la revendication 1, caractérisée en ce que les moyens de limitation des déplacements angulaires du corps dans la portion de réception correspondante (4) de la bride comprennent des parties en saillie radiale (15) vers l'intérieur de cette portion adaptées pour coopérer avec des moyens complémentaires (1a) du corps (1).

3. Bride selon la revendication 1 ou 2, caractérisée en ce qu'elle est réalisée par découpe et déformation d'un flan de tôle.

4. Bride selon la revendication 3, caractérisée en ce que des moyens (2a) de fixation des parties du flan de tôle après déformation, sont prévus au niveau de la portion de liaison (5).

5. Bride selon l'une quelconque des revendications précédentes, caractérisée en ce que le corps de colonne est réglable en position angulaire et en ce que les canons de la bride définissent des zones de contact pour l'articulation de celle-ci sur la chape.
